# EUROPÄISCHE PATENTSCHRIFT

(11) **EP 2 199 079 B1**
(45) Veröffentlichungstag und Bekanntmachung des Hinweises auf die Patenterteilung: **20.05.2015**
(21) Anmeldenummer: 09015172.1
(22) Anmeldetag: 08.12.2009
(51) Int. Cl.: B32B 27/40

(54) **Mehrschichtige Folien und deren Verwendung**
Multi-layered films and their application
Feuilles à plusieurs couches et leur utilisation

(30) Priorität: 19.12.2008 DE 102008063993
(43) Veröffentlichungstag der Anmeldung: 23.06.2010
(73) Patentinhaber: Epurex Films GmbH & Co. KG, 29656 Walsrode (DE)
(72) Erfinder: Kosthorst, Helge, 29664 Walsrode (DE); Heins, Rüdiger, 21272 Egestorf (DE); Schultze, Dirk, Dr., 29664 Walsrode (DE)

(56) Entgegenhaltungen:
- WO-A1-2007/001619

## Beschreibung

Die Erfindung betrifft mehrschichtige elastische thermoplastische Folien, die neben mindestens einer Schicht aus thermoplastischem Polyurethan und mindestens einer weiteren Schicht aus thermoplastischem Styrol-(random Styrol-Butadien)-Styrol Copolymer mit geringer Wasserdampfdurchlässigkeit zusätzlich mindestens eine weitere Schicht aufweist, und deren Verwendung.

Die Kombination von Urethan-Polymer und thermoplastischem Styrol-(random Styrol-Butadien)-Styrol Copolymer ergibt eine weichelastische Folie mit einem hohen mechanischen Eigenschaftsprofil und einer guten Wasserdampfsperrwirkung im Vergleich zu reinem thermoplastischen Polyurethan.

Für die Herstellung flexibler Behälter für gasförmige oder flüssige Medien, wie zum Beispiel Wasserbetten, werden weichelastische Folien mit guten mechanischen Eigenschaften benötigt.

Es ist bekannt, dass derartige Anwendungen mit Folien aus Weich-PVC bedient werden können. Aufgrund der spezifischen Eigenschaften des PVC ist dabei ein relativ hoher Materialeinsatz erforderlich. Außerdem wird PVC von Haus aus durch Zugabe von niedermolekularen Weichmachern weich gestellt. Diese weichmachenden Zusätze zeigen häufig Migrationstendenz, wodurch diese Folien für die besagte Anwendung nicht mehr akzeptabel sind und zudem nicht dauerhaft belastbar bzw. einsetzbar sind.

Weiterhin ist bekannt, dass thermoplastische Polyurethane für die Herstellung flexibler Behälter für gasförmige oder flüssige Medien Verwendung finden. Vorteilhaft ist hier das hohe mechanische Eigenschaftsniveau, wodurch relativ geringe Wandstärken realisiert werden können. Problematisch hierbei ist der hohe Diffusionskoeffizient für polare Medien, wie z.B. Wasserdampf.

Einschichtige Folien aus thermoplastischen Polyurethanen (TPE-U), Verfahren zu ihrer Herstellung sowie ihre Verwendung sind beispielsweise aus EP-A 0 308 683, EP-A 0 526 858, EP-A 0 571 868 oder EP-A 0 603 680 bekannt. Die in diesen Schriften beschriebenen Folien lassen sich als höher schmelzende Schicht bzw. Schichten in Dublofolien integrieren oder sind bereits in die an sich bekannten Dublofolien integriert worden. Ebenso ist die Herstellung von TPE-U-Folien unter Einsatz von im wesentlichen unverträglichen Polymeren als Mattierungsmittel in TPE-U z.B. in DE-A 41 26 499 beschrieben.

Bekannt sind auch mehrschichtige, durch Coextrusion hergestellte Folien aus TPE-U und anderen, der Gruppe der Thermoplaste zugeordneten Polymeren. Neben der Coextrusion mit polyolefinischen Thermoplasten, bei denen in der Regel die polyolefinische Schicht praktisch keine Verbundhaftung zur TPE-U-Schicht eingeht und lediglich die Funktion einer Stütz- beziehungsweise Trennschicht besitzt, sind auch mehrschichtige Aufbauten mit guter Verbundhaftung bekannt. In EP-A 0 842 768 wird beispielsweise ein mehrschichtiger Aufbau aus TPE-U und einem polyole-finischen Haftvermittler beschrieben. Bei derartigen Aufbauten kommt es aufgrund der geringen Elastizität der Thermoplaste bei häufigeren Lastwechseln mit hohen Dehnungswerten zu Rissbildungen in der Thermoplast-Schicht und somit zu einem Funktionsverlust.

Es sind auch coextrudierte Aufbauten verschiedener thermoplastischer Elastomere bekannt. Aufbauten aus TPU und Styrol-Butadien-Styrol Blockcopolymeren sind beispielsweise in WO-A 2007/001619 beschrieben. Aufbauten aus TPU, Haftvermittler und Styrol-Butadien-Styrol Blockcopolymeren sind beispielsweise in EP-A 1 145 847 beschrieben. Styrol-Butadien-Styrol Blockcopolymere zeichnen sich durch hohe Phasensegregation aus. Nachteilig ist die geringe Verbundhaftung dieser Strukturen im Hinblick auf die dynamischen und durch Quellung im Medienkontakt verursachten Belastungen im Wasserbett-Einsatz. Ebenso ist die bei Materialien mit geringer Polarität eingeschränkte Zugänglichkeit für das Hochfrequenz-Schweißverfahren problematisch, welches belastbare Nähte mit geringer Dickenreduzierung erlaubt. Die nach dem Stand der Technik bekannten Haftvermittler sind in ihrem elastischen Verhalten und ihrem Quellungsverhalten den Anforderungen an Behältnisse zur Lagerung wässriger Medien nicht gewachsen.

Neben thermoplastischen Polyurethanen existieren weitere weichelastische Materialien die allgemein unter dem Oberbegriff thermoplastische Elastomere (TPE) zusammengefasst sind. Zu den für die Folienverarbeitung geeigneten Gruppen gehören primär die Blockcopolymere. Dies sind neben den Urethan-basierenden Systemen (TPE-U) die Styrol-basierenden Systeme (TPE-S), die Polyetherestertypen (TPE-E) und die Polyetherblockamide (TPE-A). Folien auf Basis von TPE-E werden beispielsweise in US-A 5 859 083 beschrieben, wobei hier insbesondere auf die hohe Wasserdampfdurchlässigkeit abgehoben wird. Gleiches gilt für die in EP-A-0 761 715 beschriebenen Folien aus TPE-A. Für Folien geeignete TPE-S und deren Verwendung werden beispielsweise in DE-A1 9628 834 beschrieben. Eine Übersicht über die Gruppe der thermoplastischen Elastomere geben beispielsweise:
Thermoplastic elastomers; a comprehensive review, ed. N.R. Legge, G. Holden and H. E. Schroeder, Carl Hanser Verlag, München, 1987 und Thermoplastische Elastomere - Herausforderung an die Elastomerverarbeiter, Hrsg.: VDI-Gesellschaft Kunststofftechnik, VDI Verlag, Düsseldorf, 1997.

Es stellte sich somit die Aufgabe, eine weichelastische Folie mit einem mechanischen Eigenschaftsprofil, das dem von Weich-PVC überlegen ist, kombiniert mit einer hohen Wasserdampfundurchlässigkeit und dauerhaften Strukturintegrität in Form einer ausreichenden Verbundhaftung, auch unter Warmwasserkontakt, bereitzustellen. Zur Minimierung der bei der Fertigung anfallenden Kosten sollte die Kombination der Eigenschaften nach Möglichkeit in einem Einstufen-Prozess erfolgen. Die Folie muss außerdem beidseitig, ähnlich wie einschichtige TPU- oder PVC-Folien hochfrequent verschweißbar sein.

Das Hochfrequenz-Schweißen oder Radio-Frequency-Welding ist beispielsweise bei F. Abel: Schweißen in der Kunststoff-Fügetechnik, Früchtling, Hamburg (1998) beschrieben.

Erfmdungsgemäß gelang es, eine den genannten Anforderungen genügende Folie bereitzustellen.

Gegenstand der Erfindung ist eine hochfrequent verschweißbare, elastische, thermoplastische Folie, die aus mindestens drei Schichten aufgebaut ist, wobei mindestens eine Schicht (1) aus thermoplastischem Polyurethan und mindestens eine Schicht (3) aus thermoplastischem Styrol-(random Styrol-Butadien)-Styrol Copolymer und mindestens eine weitere Zwischenschicht (2) aus einer Mischung aus thermoplastischem Polyurethan und aus thermoplastischem Styrol-(random Styrol-Butadien)-Styrol Copolymer gebildet wird.

Das Verhältnis der Wasserdampfdurchlässigkeiten der Schicht (1) zur Schicht (3) beträgt bevorzugt mindestens 3:1.

Die Schicht (1) der erfindungsgemäßen Mehrschichtfolie ist aus wenigstens einem thermoplastischen Polyurethanelastomeren aufgebaut, vorzugsweise aus einem überwiegend linearen thermoplastischen Polyurethanelastomeren, dessen längerkettige Diolkomponente besonders bevorzugt ein Polyether ist, und die eine Shore-Härte von vorzugsweise 70 - 95 A, besonders bevorzugt 85 - 95 A, bestimmt nach DIN 53 505, aufweist.

Geeignete thermoplastische Polyurethan-Elastomere und/oder Mischungen derselben können beispielsweise durch die bekannten Batch-, teil- oder vollkontinuierlichen Verfahren (beispielsweise in EP-A 1 145 847 beschrieben) hergestellt werden.

Geeignete thermoplastische Polyurethane (TPE-U) sind beispielsweise unter den Handelsnamen Desmopan^{®}, Elastollan^{®}, Estane^{®}, Morthane^{®}, Pellethane^{®}, Pearlthane^{®}, Skythane^{®}, Tecoflexe^{®} oder Texin^{®} erhältlich.

Der Gesamtanteil des thermoplastischen Polyurethans in der mehrschichtigen Folie beträgt bevorzugt mindestens 50 Gew.-%, insbesondere um eine effiziente Hochfrequenzverschweißung zu gewährleisten.

In einer besonders geeigneten Ausführung weisen die erfindungsgemäßen Folien elastische Urethan-Elastomer-Rezepturkomponenten auf, deren Weichsegment-Phase zu einem überwiegenden Teil aus Ether-Weichsegment-Bausteinen gebildet wird. Ebenso geeignet sind Ether-Carbonat-Weichsegment-Bausteine. Diese zeichnen sich durch eine gute Beständigkeit gegen Hydrolyse aus. Zudem weisen derartige Materialien eine bessere Resistenz gegen Pilz- und Mikrobenbefall auf. Besonders bevorzugt sind auf Polytetramethylenglycol basierende Ether-Weichsegment-Bausteine.

Erfindungsgemäß besonders bevorzugt sind TPU, die sich durch geeignete Additivierung und Rohstoffauswahl für den Kontakt mit Trinkwasser eignen. Geeignete TPU weisen beispielsweise Weichsegmente aus Polyetherdiolen oder aus Polyethercarbonatdiolen auf. Entsprechend geeignete TPU finden sich in den Typenreihen Desmopan^{®}, Estane^{®} oder Elastollan^{®} am Markt wieder.

Zur Herstellung der Schicht (3) werden vorzugsweise thermoplastische Styrol-(random Styrol-Butadien)-Styrol Elastomere (TPE-S) mit einer Wasserdampfdurchlässigkeit eingesetzt, die zwischen 0 und 60 g/m² pro Tag liegt, gemessen an einer 100 µm Schicht nach DIN 53122 bei 38°C und 90 % relativer Feuchte.

In einer besonders bevorzugten Ausführung der erfindungsgemäßen Folie weist das zur Herstellung der Schicht (3) verwendete thermoplastische Styrol-(random Styrol-Butadien)-Styrol Copolymer eine Wasserdampfdurchlässigkeit zwischen 0 und 40 g/m² pro Tag auf, gemessen an einer 100 µm Schicht nach DIN 53122 bei 38°C und 90 % relativer Feuchte.

Die erfindungsgemäß eingesetzten TPE-S bestehen aus abwechselnden Blöcken oder Segmenten, die aus Styrol-Monomer-basierenden Einheiten, auch als Hartsegment bezeichnet, und weicheren, gummiartigen Einheiten, den sogenannten Weichsegmenten aufgebaut sind. Die einzelnen Blöcke bestehen dabei üblicherweise aus mindestens hundert Monomereinheiten. Weit verbreitet sind linear aufgebaute Triblock-Strukturen Styrol- / Weichsegment- / Styrol-Block. Ebenso gibt es lineare, sternförmige und verzweigte Strukturen basierend auf einzelnen oder wiederholt eingebauten Blöcken des Typs (Styrol- / Weichsegment -Block)n, mit n größer oder gleich 1.

Im Festkörper bilden diese Polymere mehrere Phasen aus. So liegen die Polystyrol-Blöcke vor und nach der Verarbeitung assoziiert in steifen Domänen vor. Die "physikalische Vernetzung" durch diese Domänen führt zu einem kontinuierlichen dreidimensionalen Netzwerk. Während der Verarbeitung, allgemein unter der Einwirkung von Wärme und/oder Scherung, erweicht die Polystyrol-Hartphase und ermöglicht das Fließen des Materials unter Auflösung der vormaligen Domänen. Nach der Verarbeitung bilden sich während des Abkühlvorgangs erneut die Hartsegmentdomänen aus, die somit die weiche Phase an Fließvorgängen hindern. Diese thermisch initiierbaren Eigenschaftsveränderungen können mehrfach durchlaufen werden und erlauben somit vielfache Prozessschritte mit diesen Materialien.

Die segregierte gummiartige Weichphase steuert Elastizität bzw. Weichheit zu den Materialeigenschaften bei, während die "physikalische Vernetzung" und die Wechselwirkungen zwischen den Styrol-Blöcken die Festigkeit des Styrol-Elastomeren gewährleisten. Nachteilig an der starken Segregation ist der dominante unpolare Anteil der Gummi-Phase und die damit verbundene geringe Haftung zu polaren Elastomeren wie TPU. Ebenso nachteilig ist die mangelnde Zugänglichkeit unpolarer Materialien für das Hochfrequenzschweißen.

Überraschenderweise haben die erfindungsgemäß bevorzugt eingesetzten TPE-S Copolymere, deren Weichsegment dadurch gekennzeichnet ist, dass die Weichsegment-Blöcke aus random Butadien-Styrol Coplymeren bestehen, eine sehr gute Haftungscharakteristik zu TPU. Die mit dem random Butadien-Styrol Coplymer verbundene höhere Polarität wirkt sich auch positiv auf die Schweißparameter bei der Hochfrequenz-Verschweißung aus. Das übliche Vorheizen der Schweißelektroden kann bei milderen Temperaturen erfolgen.

Zur Herstellung der zwischen den Schichten (1) und (3) liegenden Zwischenschicht (2) werden Mischungen der thermoplastischen Polyurethane und der thermoplastischen Styrol-(random Styrol-Butadien)-Styrol Copolymere eingesetzt. Der ausreichend polare Anteil einer solchen Mischung stellt die Zugänglichkeit für das Hochfrequenzverschweißen sicher. Die Phasenseparation des die Zwischenschicht bildenden Blends kann durch haft- und phasenvermittelnde Stoffe, insbesondere modifizierte PE-Copolymere zusätzlich stabilisiert werden.

Eine besonders geeignete Ausführung der erfindungsgemäßen Folien enthält zusätzlich gebräuchliche Additive aus der Gruppe umfassend:
I. Antiblockmittel, anorganische oder organische Abstandshalter,
II. Gleitmittel, Entformungsmittel,
III. Pigmente, Füllstoffe und
IV. Stabilisatoren.

Der Anteil der genannten Additive I bis IV liegt in Summe bevorzugt zwischen 0 Gew.-% und 30 Gew.-%, bezogen auf die Folie.

Die gebräuchlichen Additive, die in den erfindungsgemäßen Folien enthalten sein können, sind beispielsweise bei Gächter und Müller beschrieben in: Plastics Additives, Carl Hanser Verlag München, 4. Ausgabe (1996).

Ein mindestens fünfschichtiger Aufbau der Mehrschichtfolie, dadurch gekennzeichnet, dass die das thermoplastische Styrol-(random Styrol-Butadien)-Styrol Copolymer enthaltende Schicht (3) von mindestens zwei Schichten (2) aus Mischungen thermoplastischer Polyurethane und thermoplastischer Styrol-(random Styrol-Butadien)-Styrol Copolymere eingeschlossen ist und diese von Außenschichten aus thermoplastischem Polyurethan gemäß Schichtdefinition (1) umschlossen sind, stellt eine bevorzugte Ausführung der erfindungsgemäßen Folie dar.

Besonders bevorzugt ist dieser Aufbau mittensymmetrisch, das heißt, dass die Schichten, die sich jeweils auf beiden Seiten der mittleren Schicht befinden, jeweils dieselbe Dicke aufweisen.

Erfindungsgemäß bevorzugt sind Folien mit einer Gesamtdicke zwischen 50 µm und 600 µm.

Bei der erfindungsgemäßen dreischichtigen Folie liegt die Dicke der Schicht (1) aus thermoplastischen Polyurethanen bevorzugt zwischen 20 µm und 400 µm, die Dicke der aus thermoplastischen Styrol-(random Styrol-Butadien)-Styrol Copolymeren gebildeten Schicht (3) bevorzugt zwischen 10 µm und 200 µm. Die Dicke der dazwischen liegenden Zwischenschicht (2) aus Mischungen thermoplastischer Polyurethane und thermoplastischen Styrol-(random Styrol-Butadien)-Styrol Copolymere liegt bevorzugt zwischen 5 µm und 80 µm

Zur Herstellung der erfindungsgemäßen Mehrschichtfolie eignen sich besonders die gängigen thermischen Umformverfahren zur Verarbeitung von Kunststoffen zu mehrschichtigen Flächengebilden. Hier ist die Herstellung durch Coextrusion zu nennen, die bevorzugt nach dem Blasfolienverfahren erfolgt. Durch die Coextrusion ist zusätzlich eine bessere Verbundhaftung zu erzielen.

Die erfindungsgemäßen Folien können zusätzlich mit den bekannten physikalischen und chemischen Behandlungsmethoden, wie beispielsweise der Corona-Behandlung, ein- oder beidseitig in ihren Oberflächeneigenschaften modifiziert werden.

Bevorzugt werden die erfindungsgemäßen Folien zur Umhüllung / als Hüllstoff von Fluiden (z.B. Flüssigkeiten, Gelen, Gasen) eingesetzt. Beispielsweise werden Wasserbetten, faltbare Wassertanks oder Gelkissen (Wärme-Kälte-Kissen) mit den erfindungsgemäßen Folien hergestellt. Die Herstellung der Umhüllung erfolgt unter Einsatz gängiger Fügeverfahren. Bevorzugt ist das Hochfrequenzschweißen, welches durch Anregung molekularer Schwingungsprozesse die zum Schweißen nötige Wärme im zu verschweißenden Material erzeugt.

Die Erfindung soll anhand der nachfolgenden Beispiele näher erläutert werden.

### Beispiele

Die im Rahmen der nachfolgenden Beispiele und Vergleichsbeispiele beschriebenen Folien wurden durch Blasfoliencoextrusion hergestellt. Die zum Aufschluss thermoplastischer Harze geeigneten Schneckenwerkzeuge sind in ihrem Aufbau z.B. von Wortberg, Mahlke und Effen in: Kunststoffe, 84 (1994) 1131-1138, von Pearson in: Mechanics of Polymer Processing, Elsevier Publishers, New York, 1985 oder der Fa. Davis-Standard in: Paper, Film & Foil Converter 64 (1990) S. 84 - 90 beschrieben. Werkzeuge zum Ausformen der Schmelze zu Folien sind u.a. von Michaeli in: Extrusions-Werkzeuge, Hanser Verlag, München 1991 erläutert.

### Ausgangsmaterialien:

| | |
|---|---|
| Ether-TPE-U: | Thermoplastisches Polyurethan auf Basis Polytetrahydrofuran (Molekulargewicht 2000), 4,4'-Methylendiphenylendiisocyanat und 1,4-Butandiol als Kettenverlängerer mit einer Shore-A-Härte 87, gemessen nach DIN 53 505, entsprechend einer Härte von 36 Shore-D, einer Dichte von 1,12 g/cm³ und einem Schmelzflussindex (MFI) von 30 g/10 min gemessen bei 190°C/21,6 kg (ISO 1133) |
| Silikat: | Diatomäenerde |
| Wachs: | Ethylenbistearylamid |
| Thermoplastisches Styrol-(random Styrol-Butadien)-Styrol: | Copolymer mit einem Schmelzflussindex (MFI) von 3 g/10 min gemessen bei 190°C/2,16 kg (ISO 1133) und einer Shore-A-Härte 84, gemessen nach DIN 53 505, entsprechend einer Härte von 29 Shore-D |
| PE-LD: | Polyethylen mit einer Dichte von 0,920 g/cm³ und einem Schmelzflussindex (MFI) von 1,5g/10 min gemessen bei 190°C/2,16 kg (ISO 1133) und einer Shore D Härte von 45 gemessen nach DIN 53 505 |
| Ethylen-Acrylsäure-Ester-Copolymer-Haftvermittler-Material: | Copolymer mit einem Anteil an mit Methanol veresterter Acrylsäure von 25 Gew.-%, einer Dichte von 0,95 g/cm³ und einem Schmelzflussindex (MFI) von 3g/10 min gemessen bei 190°C/2,16 kg (ISO 1133) |

### Beispiel 1:

Mit Hilfe eines Fünfschicht-Blasfolienwerkzeuges wurde eine Folie hergestellt, deren zwei Außenschichten (1) aus einem Ether-TPE-U gebildet wurden. Diesen 70 µm dicken Schichten wurden als Additive 4 Gew.-% Silikat und 1 Gew.-% Wachs zugesetzt. Sämtliche für die jeweilige Schicht eingesetzten Komponenten wurden gemeinsam in einem Extruder aufgeschmolzen.

Die 40 µm starken Zwischenschichten (2) wurden aus einer Mischung hergestellt. Als Mischung wurden 60 Gew.-% eines thermoplastischen Styrol-(random Styrol-Butadien)-Styrol Copolymer und 40 Gew.-% eines Ether-TPE-U verwendet.

Die 80 µm dicke Kernschicht (3) wurde aus einem thermoplastischen Styrol-(random Styrol-Butadien)-Styrol Copolymer hergestellt.

Die Extrusionseinrichtungen wurden bei Temperaturen zwischen 160°C und 200°C betrieben. Die fünf Schmelzeströme wurden in einem Fünfschicht-Blasfolienkopf mit einer Verarbeitungstemperatur von 195°C übereinandergelegt und durch eine Ringspaltdüse mit einem Durchmesser von 150 mm ausgetragen. Durch Anblasen mit Luft wurde die ringförmige Schmelzefahne abgekühlt, anschließend flachgelegt, getrennt und aufgewickelt.

### Beispiel 2:

Mit Hilfe eines Dreischicht-Blasfolienwerkzeuges wurde eine Folie hergestellt, deren Schicht (1) aus einem Ether-TPE-U gebildet wurde. Dieser 100 µm dicken Schicht wurden als Additive 2 Gew.-% Silikat und 0,5 Gew.-% Wachs zugesetzt. Sämtliche für diese Schicht eingesetzten Komponenten wurden gemeinsam in einem Extruder aufgeschmolzen.

Eine 100 µm starke Schicht (2) wurde aus einer Mischung hergestellt. Es wurden 60 Gew.-% eines thermoplastischen Styrol-(random Styrol-Butadien)-Styrol Copolymer und 40 Gew.-% eines Ether-TPE-U verwendet.

Eine 100 µm dicke Schicht (3) wurde aus einem thermoplastischen Styrol-(random Styrol-Butadien)-Styrol Copolymer hergestellt.

Die Extrusionseinrichtungen wurden bei Temperaturen zwischen 170°C und 200°C betrieben. Die drei Schmelzeströme wurden in einem Dreischicht-Blasfolienkopf mit einer Verarbeitungstemperatur von 200°C übereinandergelegt und durch eine Ringspaltdüse mit einem Durchmesser von 150 mm ausgetragen. Durch Anblasen mit Luft wurde die ringförmige Schmelzefahne abgekühlt, anschließend flachgelegt, getrennt und aufgewickelt.

### Vergleichsbeispiel 3:

Mit Hilfe eines Fünfschicht-Blasfolienwerkzeuges wurde eine Folie hergestellt, deren zwei Außenschichten aus einem Ether-TPE-U gebildet wurden. Diesen 80 µm dicken Schichten wurden als Additive 4 Gew.-% Silikat und 1Gew.% Wachs zugesetzt. Sämtliche für die jeweilige Schicht eingesetzten Komponenten wurden gemeinsam in einem Extruder aufgeschmolzen.

Die 30 µm starken Zwischenschichten wurden aus einem Ethylen-Acrylsäure-Ester-Copolymer-Haftvermittler-Material gebildet.

Die 80 µm starke Kernschicht wurde aus einem PE-LD hergestellt.

Die Extrusionseinrichtungen wurden bei Temperaturen zwischen 170°C und 200°C betrieben. Die drei Schmelzeströme wurden in einem Dreischicht-Blasfolienkopf mit einer Verarbeitungstemperatur von 200°C übereinandergelegt und durch eine Ringspaltdüse mit einem Durchmesser von 150 mm ausgetragen. Durch Anblasen mit Luft wurde die ringförmige Schmelzefahne abgekühlt, anschließend flachgelegt, getrennt und aufgewickelt.

### Vergleichsbeispiel 4:

Mit Hilfe eines Dreischicht-Blasfolienwerkzeuges wurde eine Folie hergestellt, deren zwei Außenschichten aus einem Ether-TPE-U gebildet wurden. Diesen 100 µm dicken Schichten wurden als Additive 2 Gew.-% Silikat und 0,5 Gew.-% Wachs zugesetzt. Sämtliche für diese Schicht eingesetzten Komponenten wurden gemeinsam in einem Extruder aufgeschmolzen.

Die mittlere Schicht in einer Stärke von 100µm wurde aus einem thermoplastischen Styrol-(random Styrol-Butadien)-Styrol Copolymer hergestellt.

Die Extrusionseinrichtungen wurden bei Temperaturen zwischen 170°C und 200°C betrieben. Die beiden Schmelzeströme wurden in einem Dreischicht-Blasfolienkopf mit einer Verarbeitungstemperatur von 200°C übereinandergelegt und durch eine Ringspaltdüse mit einem Durchmesser von 150 mm ausgetragen. Durch Anblasen mit Luft wurde die ringförmige Schmelzefahne abgekühlt, anschließend flachgelegt, getrennt und aufgewickelt.

### Vergleichsbeispiel 5:

Mit Hilfe eines Einschicht-Blasfolienwerkzeuges wurde eine Folie hergestellt, deren Schicht aus einem Ether-TPE-U gebildet wurde. Dieser 300 µm dicken Schicht wurden als Additive 2 Gew.-% Silikat und 0,3 Gew.-% Wachs zugesetzt. Sämtliche für diese Schicht eingesetzten Komponenten wurden gemeinsam in einem Extruder aufgeschmolzen.

Die Extrusionseinrichtung wurde bei Temperaturen zwischen 170°C und 200°C betrieben. Der Schmelzestrom wurde mit einer Verarbeitungstemperatur von 200°C durch eine Ringspaltdüse mit einem Durchmesser von 150 mm ausgetragen. Durch Anblasen mit Luft wurde die ringförmige Schmelzefahne abgekühlt, anschließend flachgelegt, getrennt und aufgewickelt.

### Bewertung der im Rahmen der Beispiele hergestellten Folien:

Alle fünf Folien wurden hinsichtlich Wasserdampfdurchlässigkeit, gemessen nach DIN 53 122 bei 38°C und 90 % relativer Feuchte, und mechanischer Belastbarkeit, gemessen nach DIN EN ISO 527 (Zugversuch) und DIN 53 515 (Weiterreißfestigkeit) charakterisiert. An den beiden Mehrschichtfolien (Beispiel 1 und Beispiel 2) wurde die Verbundhaftung der Folien, gemessen nach DIN 53 357 Verfahren B, im frischen Zustand und nach einer Wasserlagerung von 18 Stunden bei 60°C bestimmt.

| | **Beispiel 1** | **Beispiel 2** | **Vergleichsbeispiel 3** | **Vergleichsbeispiel 4** | **Vergleichsbeispiel 5** |
|---|---|---|---|---|---|
| Dicke [µm] | 300 | 300 | 300 | 300 | 300 |
| Wasserdampfdurchlässigkeit DIN 53 122 bei 38°C/90 % rel. F. [g/m²] pro Tag | 40 | 20 | 8 | 33 | 130 |
| Bruchspannung [MPa] DIN EN ISO 527 | 50 | 45 | 53 | 45 | 60 |
| Bruchdehnung [%] DIN EN ISO 527 | 510 | 520 | 530 | 600 | 550 |
| Weiterreißfestigkeit [N/mm] DIN 53 515 | 65 | 55 | 70 | 50 | 50 |
| Verbundhaftung (frisch) [N/15mm] | 16 | 17 | 6 | 11 | -- |
| Verbundhaftung nach 18 h Wasserlagerung bei 60°C [N/15mm] | 8 | 8 | 3 | 4 | -- |

Die erfindungsgemäßen Folien aus Beispiel 1 und 2 sind den bekannten Folien aus den Vergleichsbeispielen 3 bis 5 deutlich überlegen. Es ist z.B. klar zu erkennen, dass durch den erfindungsgemäßen Folienaufbau in Beispiel 1 eine deutliche Reduktion der Wasserdampfdurchlässigkeit im Vergleich zum einschichtigen TPU aus Beispiel 4 erzielt wird. Die mechanischen Werte bleiben auf dem gewünschten hohen Niveau der einschichtigen TPU-Folie aus Vergleichsbeispiel 4.

Vergleichsbeispiel 3 zeigt, dass bei der Verwendung von nicht erfindungsgemäßen Materialien, hier ein Olefin-basierender Haftvermittler mit PE-LD-Schicht, als mittlere Barriereschicht, deutliche Defizite in der Verbundhaftung auftreten. Besonders bei Wasserkontakt ist die Haftung zu niedrig, so dass bei Belastung Delamination der Schichten auftreten wird. Ohne die erfindungsgemäß eingesetzten Zwischenschichten ist nach Wasserlagerung keine ausreichende Verbundhaftung zu erzielen, wie aus Vergleichsbeispiel 4 deutlich hervorgeht. Vergleichsbeispiel 5 ist ebenfalls zu durchlässig für Wasserdampf.

## Patentansprüche

1. Hochfrequenzverschweißbare mindestens dreischichtige elastische, thermoplastische Folie, **dadurch gekennzeichnet, dass** sie mindestens eine Schicht (1) aus thermoplastischem Polyurethan und mindestens eine weitere Schicht (3) aus thermoplastischem Styrol-(random Styrol-Butadien)-Styrol Copolymer und mindestens eine Zwischenschicht (2) aus einer Mischung aus thermoplastischem Polyurethan und Styrol-(random Styrol-Butadien)-Styrol Copolymer, die zwischen den Schichten (1) und (3) angeordnet ist, aufweist.

2. Folie gemäß Anspruch 1, **dadurch gekennzeichnet, dass** die Folie 5-schichtig ist mit zwei Außenschichten (1) aus thermoplastischem Polyurethan, einer Mittelschicht (3) aus Styrol-(random Styrol-Butadien)-Styrol Copolymer und zwei Zwischenschichten (2) aus einer Mischung aus thermoplastischem Polyurethan und Styrol-(random Styrol-Butadien)-Styrol Copolymer.

3. Folie gemäß einem oder mehreren der Ansprüche 1 bis 2, **dadurch gekennzeichnet, dass** der Masseanteil des thermoplastischen Polyurethans an der Folie mindestens 50 Gew.-% beträgt.

4. Folie gemäß einem oder mehreren der Ansprüche 1 bis 2, **dadurch gekennzeichnet, dass** die Wasserdampfdurchlässigkeit der Schicht (3) aus Styrol-(random Styrol-Butadien)-Styrol Copolymer zwischen 0 und 60 g/m² pro Tag liegt, gemessen an einer 50 µm Schicht nach DIN 53 122 bei 38°C und 90 % relativer Feuchte.

5. Folie gemäß einem oder mehreren der Ansprüche 1 bis 2, **dadurch gekennzeichnet, dass** die Mischung der Zwischenschicht (2) einen Anteil von 40 bis 80 Gew.-% an Styrol-(random Styrol-Butadien)-Styrol Copolymer und einen Anteil von 20 bis 60 Gew.-% an thermoplastischem Polyurethan aufweist.

6. Folie gemäß einem oder mehreren der Ansprüche 1 bis 2, **dadurch gekennzeichnet, dass** das in der Schicht (1) eingesetzte thermoplastische Polyurethan ein im Wesentlichen aus Polytetrahydrofuran- und Ethergruppen aufgebautes Weichsegment aufweist.

7. Folie gemäß einem oder mehreren der Ansprüche 1 bis 2, **dadurch gekennzeichnet, dass** das in der Schicht (1) eingesetzte thermoplastische Polyurethan ein im Wesentlichen aus Polyethercarbonatgruppen aufgebautes Weichsegment aufweist.

8. Folie gemäß einem oder mehreren der Ansprüche 1 bis 7, **dadurch gekennzeichnet, dass** die Folie durch den Blasfolienprozess herstellbar ist.

9. Folie gemäß einem oder mehreren der Ansprüche 1 bis 8, **dadurch gekennzeichnet, dass** sie eine Gesamtdicke von 50 µm bis 600 µm aufweist, wobei die Dicke der Schicht(en) (1) aus thermoplastischem Polyurethanen zwischen 20 µm und 400 µm und die Dicke der Schicht(en) (3) aus thermoplastischem Styrol-(random Styrol-Butadien)-Styrol Copolymer von 10 µm bis 200 µm beträgt.

10. Geschweißte Behälter aus einer mehrschichtigen Folie gemäß einem oder mehreren der Ansprüche 1 bis 9.

11. Verwendung der mehrschichtigen Folie gemäß einem oder mehreren der Ansprüche 1 bis 9 als Umhüllung von Fluiden.

12. Verwendung der mehrschichtigen Folie gemäß Anspruch 10 zur Herstellung von Wasserbetten, faltbaren Wassertanks oder Gelkissen (Wärme-Kälte-Kissen).

## Claims

1. High-frequency-weldable, at least three-layer resilient, thermoplastic film, **characterized in that** it has at least one layer (1) made of thermoplastic polyurethane and at least one further layer (3) made of thermoplastic styrene-(random styrene-butadiene)-styrene copolymer and, arranged between the layers (1) and (3), at least one intermediate layer (2) made of a mixture of thermoplastic polyurethane and styrene-(random styrene-butadiene)-styrene copolymer.

2. Film according to Claim 1, **characterized in that** the film has 5 layers with two external layers (1) made of thermoplastic polyurethane, with a middle layer (3) made of styrene-(random styrene-butadiene)-styrene copolymer and two intermediate layers (2) made of a mixture of thermoplastic polyurethane and styrene-(random styrene-butadiene)-styrene copolymer.

3. Film according to one or more of Claims 1 to 2, **characterized in that** the content of the thermoplastic polyurethane in the film is at least 50% by weight.

4. Film according to one or more of Claims 1 to 2, **characterized in that** the water vapour transmission of the layer (3) made of styrene-(random styrene-butadiene)-styrene copolymer is from 0 to 60 g/m2 per day, measured on a 50 µm layer in accordance with DIN 53 122 at 38°C and 90% relative humidity.

5. Film according to one or more of Claims 1 to 2, **characterized in that** the mixture of the intermediate layer (2) has from 40 to 80% by weight content of styrene-(random styrene-butadiene)-styrene copolymer and from 20 to 60% by weight content of thermoplastic polyurethane.

6. Film according to one or more of Claims 1 to 2, **characterized in that** the thermoplastic polyurethane used in the layer (1) has a soft segment essentially consisting of polytetrahydrofuran groups and ether groups.

7. Film according to one or more of Claims 1 to 2, **characterized in that** the thermoplastic polyurethane used in the layer (1) has a soft segment essentially consisting of polyether carbonate groups.

8. Film according to one or more of Claims 1 to 7, **characterized in that** the film can be produced by a blown-film process.

9. Film according to one or more of Claims 1 to 8, **characterized in that** its total thickness is from 50 µm to 600 µm, where the thickness of the layer(s) (1) made of thermoplastic polyurethanes is from 20 µm to 400 µm and the thickness of the layer(s) (3) made of thermoplastic styrene-(random styrene-butadiene)-styrene copolymer is from 10 µm to 200 µm.

10. Welded container made of a multilayer film according to one or more of Claims 1 to 9.

11. Use of the multilayer film according to one or more of Claims 1 to 9 as material enclosing fluids.

12. Use of the multilayer film according to Claim 10 for the production of water beds, foldable water tanks or gel pads (heat/cold pads).

## Revendications

1. Feuille thermoplastique, élastique, au moins à trois couches, soudable par haute fréquence, **caractérisée en ce qu'**elle présente au moins une couche (1) en polyuréthane thermoplastique et au moins une autre couche (3) en copolymère thermoplastique de styrène-(styrène-butadiène statistique)-styrène et au moins une couche intermédiaire (2) en un mélange de polyuréthane thermoplastique et de copolymère de styrène-(styrène-butadiène statistique)-styrène qui est disposée entre les couches (1) et (3).

2. Feuille selon la revendication 1, **caractérisée en ce que** la feuille est à 5 couches et présente deux couches externes (1) en polyuréthane thermoplastique, une couche intermédiaire (3) en copolymère de styrène-(styrène-butadiène statistique)-styrène et deux couches intermédiaires (2) en un mélange de polyuréthane thermoplastique et de copolymère de styrène-(styrène-butadiène statistique)-styrène.

3. Feuille selon l'une ou plusieurs des revendications 1 à 2, **caractérisée en ce que** la proportion massique du polyuréthane thermoplastique par rapport à la feuille est d'au moins 50% en poids.

4. Feuille selon l'une ou plusieurs des revendications 1 à 2, **caractérisée en ce que** la perméabilité à la vapeur d'eau de la couche (3) en copolymère de styrène-(styrène-butadiène statistique)-styrène est située entre 0 et 60 g/m² par jour, mesurée sur une couche de 50 µm selon la norme DIN 53 122 à 38°C et à une humidité relative de 90%.

5. Feuille selon l'une ou plusieurs des revendications 1 à 2, **caractérisée en ce que** le mélange de la couche intermédiaire (2) présente une proportion de 40 à 80% en poids de copolymère de styrène-(styrène-butadiène statistique)-styrène et une proportion de 20 à 60% en poids de polyuréthane thermoplastique.

6. Feuille selon l'une ou plusieurs des revendications 1 à 2, **caractérisée en ce que** le polyuréthane thermoplastique utilisé dans la couche (1) présente un segment souple essentiellement constitué de groupes polytétrahydrofuranne et éther.

7. Feuille selon l'une ou plusieurs des revendications 1 à 2, **caractérisée en ce que** le polyuréthane thermoplastique utilisé dans la couche (1) présente un segment souple essentiellement constitué de groupes polyéthercarbonate.

8. Feuille selon l'une ou plusieurs des revendications 1 à 7, **caractérisée en ce que** la feuille peut être produite par le procédé de soufflage de feuilles.

9. Feuille selon l'une ou plusieurs des revendications 1 à 8, **caractérisée en ce qu'**elle présente une épaisseur totale de 50 µm à 600 µm, l'épaisseur de la ou des couches (1) en polyuréthane thermoplastique étant située entre 20 µm et 400 µm et l'épaisseur de la ou des couches (3) en copolymère thermoplastique de styrène-(styrène-butadiène statistique)-styrène étant de 10 µm à 200 µm.

10. Récipient soudé en une feuille multicouche selon l'une ou plusieurs des revendications 1 à 9.

11. Utilisation de la feuille multicouche selon l'une ou plusieurs des revendications 1 à 9 comme enveloppe de fluides.

12. Utilisation de la feuille multicouche selon la revendication 10 pour la fabrication de matelas à eau, de citernes à eau pliables ou de coussins de gel (coussins chaud-froid).
